# EUROPEAN PATENT APPLICATION

(11) **EP 4 697 851 A1**
(43) Date of publication of application: **18.02.2026**
(21) Application number: 24788592.4
(22) Date of filing: 29.03.2024
(51) Int. Cl.: H04W 76/15, H04W 84/12

(54) **COMMUNICATION DEVICE, COMMUNICATION DEVICE CONTROL METHOD, AND PROGRAM**

(30) Priority: 12.04.2023 JP 2023065262
(71) Applicant: Canon Kabushiki Kaisha, Tokyo, 146-8501 (JP)
(72) Inventor: TAKADA Tomoyuki, Tokyo 146-8501 (JP)
(74) Representative: Canon Europe Limited
(86) International application number: PCT/JP2024/012965
(87) International publication number: WO 2024/214564

(57) **Abstract**

A communication apparatus capable of operating as an access point establishes a multilink with another communication apparatus in response to a connection request from the other communication apparatus. The communication apparatus transmits information related to an operation in an Enhanced Multi-Link Single Radio (EMLSR) mode in a case where the multilink is established.

## Description

### Technical Field

The present invention relates to a communication apparatus that performs wireless communication, a control method for a communication apparatus, and a program.

### Background Art

The IEEE 802.11 series of standards is known as the WLAN communication standard developed by the Institute of Electrical and Electronics Engineers (IEEE). Note that WLAN stands for Wireless Local Area Network. The IEEE 802.11 series of standards includes IEEE 802.11a, b, g, n, ac, ax, be, and other standards. The IEEE 802.11a/b/g/n/ac/ax/be standards are standards targeted for the 2.4 GHz, 5GHz, or 6GHz frequency bands.

PTL 1 discloses that, in the IEEE 802.11ax standard, wireless communication is performed using Orthogonal Frequency Division Multiple Access (OFDMA). The IEEE 802.11ax standard achieves high effective throughput by performing wireless communication using OFDMA.

In the IEEE 802.11be standard, which is the successor to the IEEE 802.11ax standard, multi-link operation is being studied, in which a single Access Point Multi-Link Device (AP MLD) establishes multiple links in parallel with a single non-AP-MLD (also referred to as a Station MLD) over multiple frequency channels to perform communication. In addition, the Enhanced Multi-Link Single Radio (EMLSR) mode is considered as one operation mode in multi-link operation. The EMLSR mode is defined only for non-access point multilink devices (non-AP MLDs) and is not defined for access point multi-link devices (AP MLDs).

While operating in the EMLSR mode, a non-AP MLD waits simultaneously on the multiple links (EMLSR links) established with an AP MLD to receive an initial control frame transmitted by the AP MLD. Here, for each of the EMLSR links, generally a different channel is selected. The AP-MLD selects one link and transmits an initial Control frame on the link. In this case, the AP-MLD can select the optimal link (for example, a channel that is not congested in the communication environment). Then, when receiving the initial Control frame, the non-AP MLD exchanges data with the AP MLD over the link on which the frame was received. Note that the non-AP MLD does not transmit on multiple links simultaneously or receive frames other than the initial Control frame, while operating in the EMLSR mode.

### Citation List

### Patent Literature

PTL 1: Japanese Patent Laid-Open No. 2018-50133

### Summary of Invention

### Technical Problem

However, as described above, the IEEE 802.11 standard does not specify a method for AP MLDs to operate in the EMLSR mode. Thus, there is a problem in that it is impossible to operate AP MLDs in the EMLSR mode.

The present invention has been made in light of at least one of the above-described problems. As one aspect of the present invention, in order to operate an AP MLD in the EMLSR mode, one of the objects is to provide a mechanism for the AP MLD to issue an appropriate notification to a non-AP MLD in a case where the AP MLD is capable of operating in the EMLSR mode. Another aspect of the present invention is to increase the convenience of multi-link operation. Solution to Problem

The present invention has been made in light of at least one of the above-mentioned problems. As one aspect of the present invention, in order to operate an AP MLD in the EMLSR mode, one of objects is to provide a mechanism for the AP MLD to issue an appropriate notification to a non-AP MLD in a case where the AP MLD is capable of operating in the EMLSR mode. As another aspect of the present invention, one of the objects is to increase the convenience of multi-link operation.

In order to achieve the above-described objects, a communication apparatus according to an aspect of the present invention is a communication apparatus capable of operating as an access point, the communication apparatus including an establishing means that establishes a multilink with another communication apparatus in response to a connection request from the other communication apparatus, and a transmission means that transmits information related to an operation in an Enhanced Multi-Link Single Radio (EMLSR) mode in a case where the multilink is established.

A communication apparatus according to an aspect of the present invention includes an establishing means that establishes a multilink with an access point, a reception means that receives information related to an operation in an Enhanced Multi-Link Single Radio (EMLSR) mode in a case where the multilink is established, and a transmission means that transmits a predetermined frame to the access point, based on the information related to the operation in the EMLSR mode received by the reception means.

### Advantageous Effects of Invention

According to one aspect of the present invention, in a case where an AP MLD is capable of operating in the EMLSR mode, the AP MLD can issue an appropriate notification to a non-AP MLD. According to another aspect of the present invention, the convenience of multi-link operation can be increased.

### Brief Description of Drawings

[Fig. 1] Fig. 1 is a diagram illustrating an example of the configuration of a network according to the present invention.
[Fig. 2] Fig. 2 is a diagram illustrating an example of the hardware configuration of a communication apparatus according to the present invention.
[Fig. 3] Fig. 3 is a diagram illustrating an example of a functional configuration of the communication apparatus according to the present invention.
[Fig. 4] Fig. 4 is a diagram illustrating an example of the operation of the communication apparatus related to an operation for enabling-disabling the EMLSR mode.
[Fig. 5] Fig. 5 is a diagram illustrating an example of the configuration of a Ultra High Reliability (UHR) Operation element.
[Fig. 6] Fig. 6 is a diagram illustrating an example of the configuration of a Probe Request Multi-Link element.
[Fig. 7] Fig. 7 is a diagram illustrating an example of the configuration of a Basic Multi-Link element.
[Fig. 8] Fig. 8 is a diagram illustrating the operation of the communication apparatus related to an operation for permitting enabling of the EMLSR mode.

### Description of Embodiments

In the following, embodiments of the present invention will be described in detail with reference to the accompanying drawings. Note that the configurations illustrated in the following embodiments are only examples, and the present invention is not limited to the illustrated configurations.

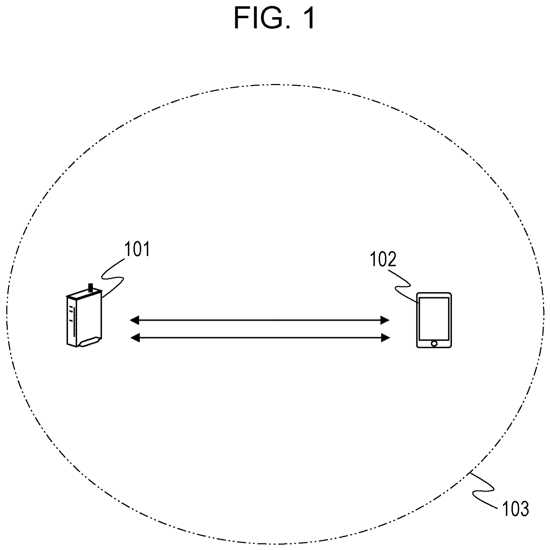

Fig. 1 illustrates an example of a network configuration according to the present invention. Fig. 1 illustrates an example of a network configuration in which a communication apparatus 102 participates in a network 103 established by a communication apparatus 101.

The communication apparatus 101 is an Ultra High Reliability Access Point Multi-Link Device (UHR AP MLD) that supports the IEEE 802.11 UHR standard. UHR AP MLD is hereinafter simply referred to as "AP MLD". The communication apparatus 102 is an Ultra High Reliability non-access point multi-link device (UHR non-AP MLD) that supports the IEEE 802.11 UHR standard. UHR non-AP MLD is hereinafter simply referred to as "non-AP MLD". An AP MLD includes multiple access points (APs). A non-AP MLD includes multiple non-AP stations (STAs) (non-access point station. Non-AP STA is hereafter simply referred to as "STA". The AP MLD and the non-AP MLD can establish a multilink, in which multiple links are established in parallel, by establishing multiple links between the multiple APs of the AP MLD and the multiple STAs of the non-AP MLD. The communication apparatuses 101 and 102 are configured to be able to perform communication of wireless frames in compliance with the successor standard to IEEE 802.11be, a successor standard that aims to improve reliability and achieve low latency. Note that IEEE stands for Institute of Electrical and Electronics Engineers. Based on the above, the successor standard, which aims to improve reliability and achieve low latency, to IEEE 802.11be will also be referred to as IEEE 802.11bn or IEEE 802.11 Ultra High Reliability (UHR) in the present embodiment. Wireless frames for communication under the successor standard are also referred to as UHR PPDUs. PPDU stands for PLCP Protocol Data Unit, and PLCP stands for Physical Layer Convergence Protocol.

The names, IEEE 802.11bn, IEEE 802.11 UHR, and the UHR standard, are established for convenience based on the goals to be achieved in the successor standard and the features that will be the main focus of the standard, and may become a different name once the standard has been finalized. In contrast, note that this specification and the appended claims are essentially applicable to any successor standard to the 802.11be standard.

The communication apparatuses 101 and 102 can communicate in the microwave bands, including the 2.4 GHz, 5 GHz, and 6 GHz bands, or in the millimeter wave band above 45 GHz, including the 60 GHz band. The communication apparatuses 101 and 102 can operate in the microwave bands with a channel bandwidth of 20 MHz, 40 MHz, 80 MHz, 160 MHz, 320 MHz, 480 MHz, or 640 MHz. In the millimeter wave band, the communication apparatuses 101 and 102 can operate with a channel bandwidth of 2.16 GHz, 4.32 GHz, 6.48 GHz, or 8.64 GHz. In the millimeter wave band, the communication apparatuses 101 and 102 can further operate at 2.16/n [GHz] (n is a natural number greater than or equal to 2) or 20 × m [MHz] (m is a natural number). Notwithstanding the above, the communication apparatuses 101 and 102 may only be capable of operating in the millimeter wave band with a channel bandwidth of less than 2.16 GHz.

Although the communication apparatuses 101 and 102 are assumed to support the IEEE 802.11 UHR standard, the communication apparatuses 101 and 102 may also additionally support the IEEE 802.11 standard, which predates the IEEE 802.11 UHR standard. Specifically, the communication apparatuses 101 and 102 may support at least one of the IEEE 802.11a, b, g, n, ac, ax, and be standards.

In addition to the IEEE 802.11 standard series, the communication apparatuses 101 and 102 may also support other communication standards such as Bluetooth^{®}, NFC, UWB, ZigBee, and MBOA. Note that UWB stands for Ultra Wide Band, and MBOA stands for Multi Band OFDM Alliance. NFC stands for Near Field Communication. UWB includes wireless USB, wireless 1394, and WiNET, for example. Moreover, each communication apparatus may support communication standards for wired communications, such as wired LAN.

The communication apparatus 101 is an AP MLD configured to be able to operate in the EMLSR mode. The EMLSR mode is a mode in which a communication apparatus waits simultaneously on the multilink established with a partner apparatus to receive a wireless frame (initial frame) for initiating data exchange, but uses only one of the multiple links of the multilink during the data exchange. This can reduce the power consumption of the communication apparatus or the hardware or software resources that make up the communication apparatus. The communication apparatus 101 can also establish EMLSR links with non-AP-MLDs to operate in the EMLSR mode. EMLSR links are a multilink established between the communication apparatus 101 and a partner apparatus such that the communication apparatus 101 can operate in the EMLSR mode.

Although specific examples of the communication apparatus 101 include, but are not limited to, wireless LAN routers and personal computers (PCs), any communication apparatus that can operate as an access point is acceptable.

The communication apparatus 101 may be an information processing device such as a wireless chip that can perform wireless communication that conforms to the IEEE 802.11 UHR standard.

Specific examples of the communication apparatus 102 include, but are not limited to, cameras, tablets, smartphones, PCs, cell phones, video cameras, headsets, network cameras, printers, and projectors. The communication apparatus 102 may be an information processing device such as a wireless chip that can perform wireless communication that conforms to the IEEE 802.11 UHR standard.

The wireless network in Fig. 1 includes one AP MLD and one non-AP MLD, but the number of AP MLDs and that of non-AP MLDs are not limited to these. For example, the wireless network may include multiple non-AP MLDs.

### (AP MLD and Non-AP MLD Configurations)

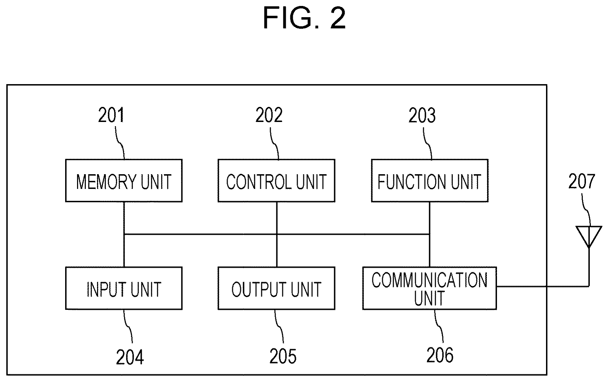

Fig. 2 illustrates an example of the hardware configuration of the communication apparatus 101 according to the present embodiment. The communication apparatus 101 includes a memory unit 201, a control unit 202, a function unit 203, an input unit 204, an output unit 205, a communication unit 206, and an antenna 207. There may be multiple antennas.

The memory unit 201 includes one or more memories such as a read-only memory (ROM) and a random access memory (RAM), and stores computer programs for performing various operations described below and various types of information, such as communication parameters for wireless communication. ROM stands for Read Only Memory, and RAM stands for Random Access Memory. Note that, as the memory unit 201, a storage medium such as a flexible disk, a hard disk, an optical disk, a magneto-optical disk, a compact disc read-only memory (CD-ROM), a compact disc recordable (CD-R), a magnetic tape, a non-volatile memory card, or a digital video disc (DVD) may also be used other than memories such as a ROM and a RAM. The memory unit 201 may include, for example, multiple memories.

The control unit 202 includes, for example, one or more processors, such as a central processing unit (CPU) and a microprocessing unit (MPU), and controls the entire communication apparatus 101 by executing computer programs stored in the memory unit 201. The control unit 202 may control the entire communication apparatus 101 through cooperative execution of the computer programs and operating system (OS) stored in the memory unit 201. The control unit 202 also generates data and signals (wireless frames) to be transmitted in communications with other communication apparatuses. Note that CPU stands for Central Processing Unit, and MPU stands for Micro Processing Unit. The control unit 202 may be equipped with multiple processors such as multi-core processors and may use the multiple processors to control the entire communication apparatus 101.

The control unit 202 also controls the function unit 203 to perform wireless communication and predetermined processes, such as image capturing, printing, and projection. The function unit 203 is the hardware for the communication apparatus 101 to perform the predetermined processes.

The input unit 204 accepts various operations from the user. The output unit 205 provides various outputs to the user through a monitor screen and speakers. In this case, outputs from the output unit 205 include display on the monitor screen, sound output through the speakers, vibration output, and the like. It is possible to realize both the input unit 204 and the output unit 205 in a single module, such as a touch panel. The input unit 204 and the output unit 205 may each be integrally formed with the communication apparatus 101 or may each be separate from the communication apparatus 101.

The communication unit 206 controls wireless communication that conforms to the IEEE 802.11 UHR standard. The communication unit 206 may control wireless communication that conforms to other IEEE 802.11 series of standards in addition to the IEEE 802.11 UHR standard, and may also control wired communication such as wired LAN. The communication unit 206 controls the antenna 207 to transmit and receive signals for wireless communication generated by the control unit 202.

In a case where the communication apparatus 101 supports, for example, NFC and Bluetooth standards in addition to the IEEE 802.11 UHR standard, the communication apparatus 101 may control wireless communications that conform to these communication standards. In a case where the communication apparatus 101 is capable of performing wireless communications that conform to multiple communication standards, the communication apparatus 101 may be configured to have communication units and antennas corresponding to the respective communication standards separately. The communication apparatus 101 exchanges data, such as image data, document data, video data, and other data, with the communication apparatus 102 via the communication unit 206. The antenna 207 may be configured as a separate unit from the communication unit 206, or the antenna 207 and the communication unit 206 may be formed as a single integrated module.

The antenna 207 is an antenna capable of performing communication in the 2.4 GHz band, the 5 GHz band, and the 6 GHz band. The communication apparatus 101 may have one or more antennas. Alternatively, the communication apparatus 101 may have different antennas for the respective frequency bands. In a case where the communication apparatus 101 has multiple antennas, the communication apparatus 101 may have communication units 206 corresponding to the respective antennas.

Note that the communication apparatus 102 has substantially the same hardware configuration as the communication apparatus 101.

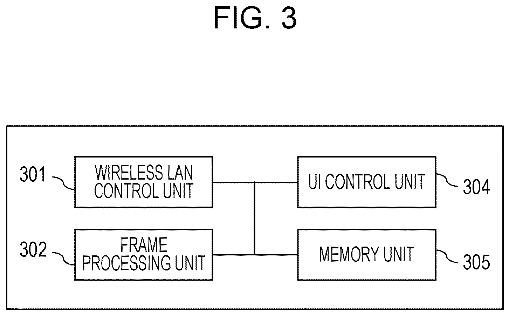

Fig. 3 is a block diagram illustrating an example of the functional configuration of the communication apparatus 101 according to the present embodiment. In the present embodiment, each functional block is stored as a program in the memory unit 201, and its function is carried out by the control unit 202 executing the program. The control unit 202 executes the program to control each hardware device and compute and process information, so that each function is implemented. Note that one or more or all of the components included in the present functional blocks may be implemented as hardware. In this case, one or more or all of the components included in each functional block are composed of, for example, an Application Specific Integrated Circuit (ACIC). Suppose that the communication apparatus 102 also has substantially the same configuration in the present embodiment.

In the present embodiment, suppose that the communication apparatus 101 has a wireless LAN control unit 301. Note that the number of wireless LAN control units is not limited to one but may be more than one. The communication apparatus 101 also includes a frame processing unit 302, a user interface (UI) control unit 304, and a memory unit 305.

The wireless LAN control unit 301 includes an antenna and circuit for transmitting and receiving wireless signals to and from other wireless LAN devices and a program for controlling them. The wireless LAN control unit 301 performs wireless LAN communication control based on frames generated by the frame processing unit 302 in accordance with the IEEE 802.11 standard series.

The frame processing unit 302 performs processing for generating wireless control frames to be transmitted by the wireless LAN control unit 301 and processing for analyzing frames received via the control unit 301. Note that the frame processing unit 302 refers to operation settings such as parameters for communication stored in the memory unit 305 to perform processing for interpretation and generation of frames. Moreover, the frame processing unit 302 may be configured to change operation settings based on user operations accepted via the UI control unit 304. Information regarding the frames generated by the control unit 301 is transmitted to the communication partner apparatus via the wireless LAN control unit 301. Information regarding the frames received by the wireless LAN control unit 301 is passed to the frame processing unit 302 for analysis.

The UI control unit 304 includes a hardware device related to user interfaces, such as touch panels or buttons for accepting operations from the user, and programs for controlling them. For example, the wireless LAN control unit 301 accepts operations from the user via the UI control unit 304 to select a partner apparatus to which the communication apparatus 101 connects. Note that the UI control unit 304 also has functions to indicate information to the user, for example, by displaying images, etc., or via audio output.

The memory unit 305 includes one or more memories, such as a ROM and a RAM, and stores computer programs for performing various operations described below and various types of information, such as communication parameters for wireless communication.

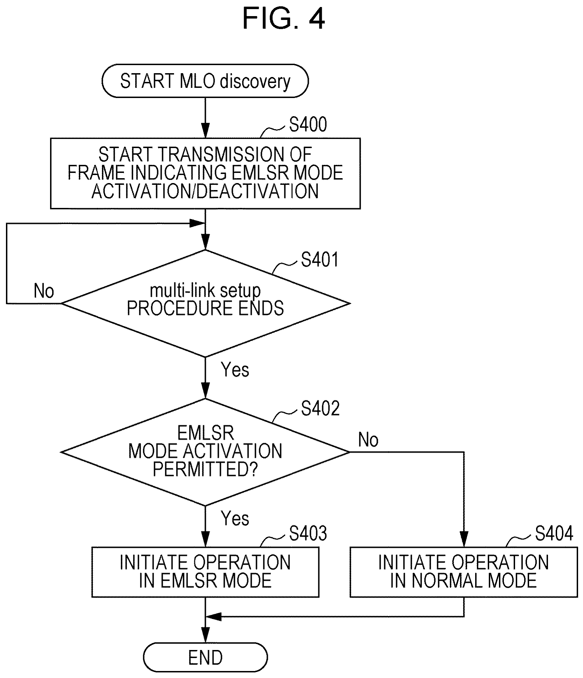

Next, the operation of the communication apparatus 101, that is, an AP MLD related to an operation for enabling or disabling the Enhanced Multi-Link Single Radio (EMLSR) mode according to the present invention will be described using Fig. 4. In the present embodiment, it is assumed that individual processes indicated by the flowchart illustrated in Fig. 4 are realized by a processor of the control unit 202 of the communication apparatus 101 executing programs for realizing each control module. Note that data transmission-reception processing, etc. is realized in cooperation with hardware such as a communication unit. Note that in a case where the subject of processing is to be clarified, each function unit realized by the control unit 202 executing the program will be described as the subject. As described above, part or the entirety of the processing may be realized by hardware such as ASICs, ASSPs, SoCs, etc. ASSP stands for Application Specific Standard Product, and SoC stands for Sysyem on a Chip.

Fig. 4 illustrates a series of processes in which the communication apparatus 102 serving as an opposing apparatus finds the communication apparatus 101 via a search, establishes a connection with the communication apparatus 101, and determines a communication mode for when communicating with the opposing apparatus. This process begins when the wireless LAN control unit 301 initiates a Multi-Link Operation (MLO) discovery procedure. Note that the MLO discovery procedure is to search for MLDs in a surrounding region. In the communication apparatus 101, the MLO discovery procedure is a procedure related to transmission of Beacon frames and Probe Response frames performed by the wireless LAN control unit 301.

Once the MLO discovery procedure is initiated, the wireless LAN control unit 301 determines whether to attempt enabling of the EMLSR mode, that is, whether to attempt operation in the EMLSR mode on a multilink established with the partner apparatus. To attempt enabling of the EMLSR mode is to indicate to the partner apparatus that the communication apparatus desires to operate in the EMLSR mode and to expect a response from the partner apparatus to that desire. Note that the MLO discovery procedure may be initiated based on a user instruction accepted by the UI control unit 304 through an interface such as a touch panel. The wireless LAN control unit 301 may also determine whether to operate in the EMLSR mode, based on information prestored in the memory unit 305 or information accepted by the UI control unit 304 from the user through the input unit 204 such as a touch panel. For example, the wireless LAN control unit 301 may determine to attempt enabling of the EMLSR mode in a case where the UI control unit 304 accepts an instruction to operate with low power consumption from the user (or accepted such an instruction in the past and stores it as an operation setting). Based on the determination as to whether to attempt enabling of the EMLSR mode, the wireless LAN control unit 301 starts including information indicating that enabling or disabling of the EMLSR mode is being attempted in a frame to be transmitted during the MLO discovery procedure, and transmitting the frame (S400). As described above, the frames that the wireless LAN control unit 301 may transmit during the MLO discovery procedure are Beacon frames or Probe Response frames. Beacon frames are transmitted at predetermined intervals (for example, 100 ms). In a case where a Probe Request frame is received from the communication apparatus 102, a Probe Response frame is transmitted as a response to the Probe Request frame. Note that the timing at which a Probe Response frame is transmitted is not limited to this and may be transmitted at any timing.

After detecting the partner apparatus during the MLO discovery procedure, the wireless LAN control unit 301 initiates a multi-link setup procedure. In the multi-link setup procedure, a connection is established with the partner apparatus detected in the MLO discovery procedure described above. The multi-link setup procedure is initiated, for example, in response to a connection request from the partner apparatus. Note that the multi-link setup procedure is a procedure related to connections with other MLDs. For example, a multilink connection is established with another MLD.

The procedure will be described in detail. First, the wireless LAN control unit 301 includes information corresponding to the determination result as to whether enabling of the EMLSR mode is being attempted in a frame to be transmitted during the multi-link setup procedure and transmits the frame. In a case where it is determined that the enabling of the EMLSR mode is being attempted, the control unit 301 includes information indicating that the enabling of the EMLSR mode is being attempted. In contrast, in a case where it is determined that the enabling of the EMLSR mode is not being attempted, the control unit 301 includes information indicating that disabling of the EMLSR mode is being attempted. Note that the frame to be transmitted during the multi-link setup procedure is an Association Response frame or a Reassociation Response frame, for example. In a case where an Association Request frame is received from the communication apparatus 102, an Association Response frame is transmitted as a response to the Association Request frame. In a case where a Reassociation Request frame is received from the communication apparatus 102, a Reassociation Response frame is transmitted as a response to the Reassociation Request frame. Note that the timings at which an Association Response frame and a Reassociation Response frame are transmitted are not limited to these and may be transmitted at any timings.

The wireless LAN control unit 301 includes a UHR Operation element related to operation control of the STA or MLD that supports the IEEE 802.11 UHR standard in a frame to be transmitted during the MLO discovery procedure or during the multi-link setup procedure. By including information indicating that the communication apparatus 101 is attempting to enable the EMLSR mode in the element, the wireless LAN control unit 301 can indicate to the partner apparatus that the communication apparatus 101 is attempting to enable the EMLSR mode.

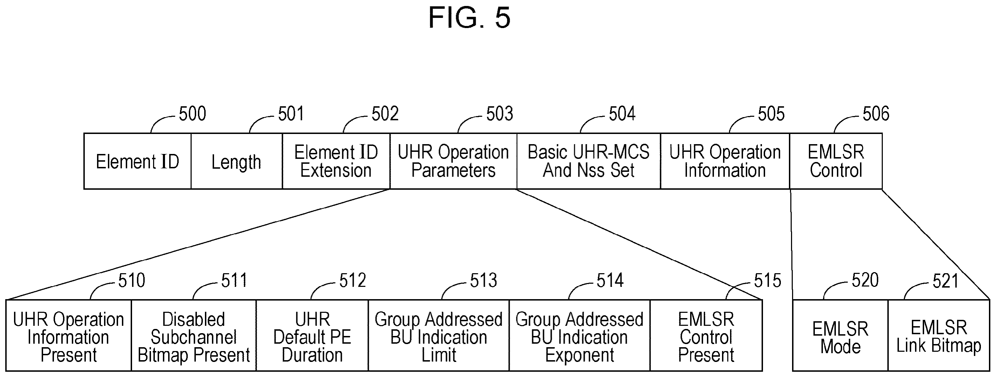

Fig. 5 illustrates an example of the configuration of a UHR Operation element in a case where information indicating that the enabling of the EMLSR mode is being attempted is included. The UHR Operation element includes fields 500 to 506. The UHR Operation element includes substantially the same information as an EHT Operation element specified in IEEE 802.11be, but also includes some subfields of a UHR Operation Parameters field 503 and an EMLSR Control field 506. The Element ID field 500, the Length field 501, and the Element ID Extension field 502 each include substantially the same information as the fields of the same names specified by the IEEE 802.11be standard. The UHR Operation Parameters field 503 includes substantially the same information as an EHT Operation Parameters field specified in the IEEE 802.11be standard, but also includes an EMLSR Control Present subfield 515. Note that the UHR Operation Parameters field 503 will be described in detail below. The Basic UHR-MCS And Nss Set field 504 and the UHR Operation Information field 505 each include substantially the same information as the Basic EHT-MCS And Nss Set field and EHT Operation Information field specified in the IEEE 802.11be standard. The EMLSR Control field 506 is a field including information used to control the operation of an STA or MLD related to the EMLSR mode. Note that the EMLSR Control field 506 will be described in detail below.

The UHR Operation Parameters field 503 includes subfields 510 to 515. The UHR Operation Information Preset subfield 510 includes substantially the same information as the EHT Operation information Preset subfield specified in the IEEE 802.11be standard. The Disabled Subchannel Bitmap Present subfield 511 includes substantially the same information as the subfield of the same name specified in the IEEE 802.11be standard. The UHR Default PE Duration subfield 512 includes substantially the same information as the EHT Default PE Duration subfield specified in the IEEE 802.11be standard. The Group Addressed BU Indication Limit subfield 513 and the Group Addressed BU Indication Exponent subfield 514 each include substantially the same information as the subfields of the same names specified in the IEEE 802.11be standard. The EMLSR Control Present subfield 515 indicates whether the UHR Operation element includes the EMLSR Control field 506, and the subfield has a length of 1 bit. In a case where its value is 1, it means that the UHR Operation element includes the EMLSR Control field 506. In contrast, in a case where its value is 0, it means that the UHR Operation element does not include the EMLSR Control field 506.

The EMLSR Control field 506 is present in a case where the value of the EMLSR Control Present subfield 515 is 1 and not present in a case where the value of the EMLSR Control Present subfield 515 is 0. The EMLSR Control field 506 includes subfields 520 and 521. The EMLSR Mode subfield 520 indicates whether the enabling of the EMLSR mode is being attempted. This subfield has a length of 1 bit. In a case where its value is 1, it means that the enabling of the EMLSR mode is being attempted. In contrast, in a case where its value is 0, it means that the disabling of the EMLSR mode is being attempted. The EMLSR Link Bitmap subfield 521 indicates the link IDs of links to be used as the EMLSR links. This subfield has a length of 16 bits, and the i-th bit corresponds to the status of the link whose Link ID is i. For example, bit 0 corresponds to the status of a link whose Link ID is 0, and bit 1 corresponds to the status of a link whose Link ID is 1. In a case where the value of the bit is 1, it means that the enabling of the EMLSR mode is being attempted. In contrast, in a case where its value is 0, it means that the disabling of the EMLSR mode is being attempted.

The wireless LAN control unit 301 of the communication apparatus 101 receives the Probe Request frame transmitted from the opposing apparatus, such as the communication apparatus 102, during the MLO discovery procedure. The wireless LAN control unit 301 of the communication apparatus 101 then receives the Association Request or Reassociation Request frame transmitted from the opposing apparatus, such as the communication apparatus 102, during the multi-link setup procedure. In a case where the communication apparatus 102 transmits these frames, the communication apparatus 102 includes information indicating whether the communication apparatus 101 is permitted to enable the EMLSR mode in the frames and transmits the frames.

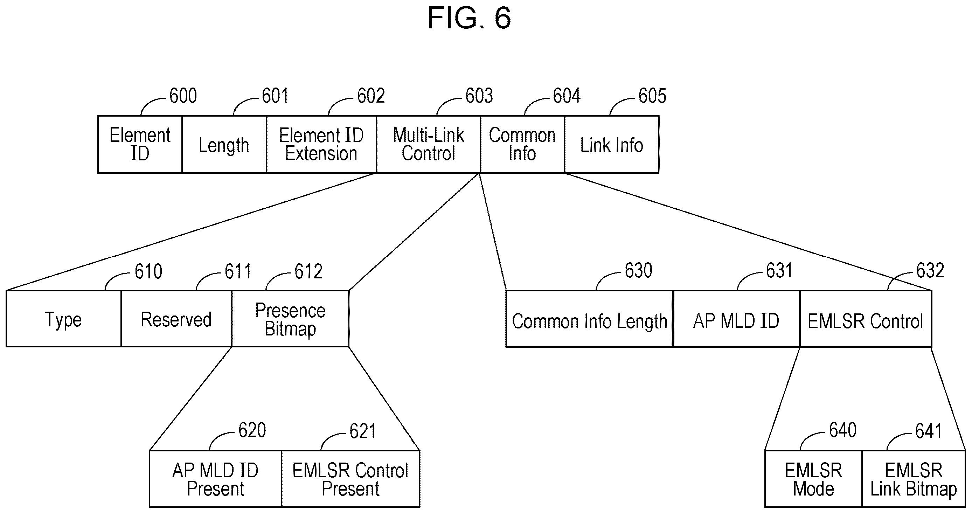

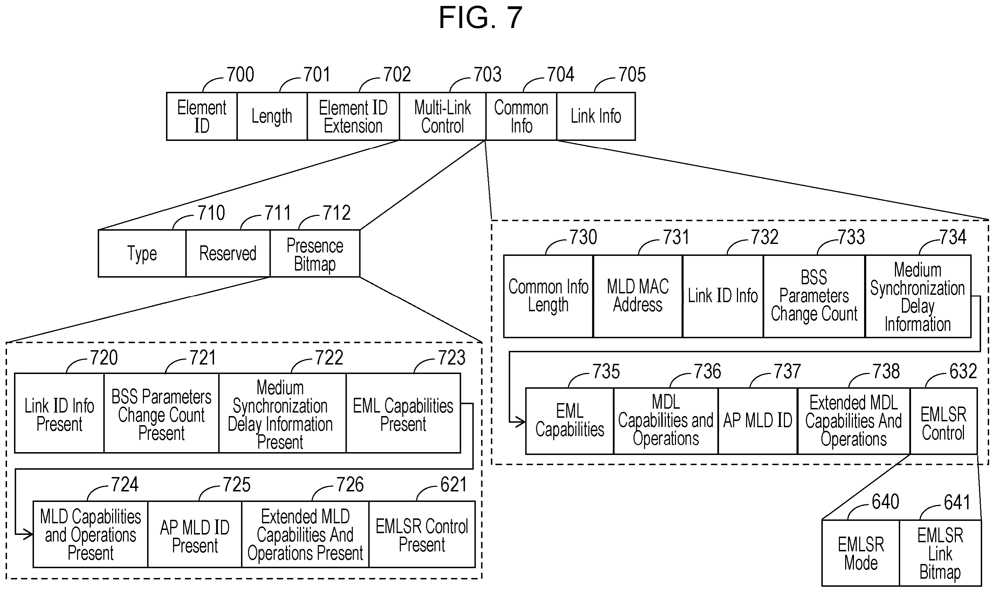

In this case, Figs. 6 and 7 are used to describe the frames and elements according to the present invention that the communication apparatus 102 transmits to the communication apparatus 101 during the MLO discovery or multi-link setup procedure.

The communication apparatus 102 includes a Probe Request Multi-Link element in the Probe Request frame and includes information indicating whether or not the communication apparatus 101 is permitted to enable the EMLSR mode in the element.

Fig. 6 illustrates an example of the configuration of the Probe Request Multi-Link element in a case where information indicating whether or not enabling of the EMLSR mode is permitted is included. The Probe Request Multi-Link element includes fields 600 to 605. The Probe Request Multi-Link element includes substantially the same information as the elements of the same names specified in the IEEE 802.11be standard, but also includes some subfields of the Multi-link Control field 603 and some subfields of the Common Info field 604. The Element ID field 600, the Length field 601, and the Element ID Extension field 602 each include substantially the same information as the fields of the same names specified in IEEE 802.11be. The Multi-link Control field 603 includes substantially the same information as the field of the same name specified in the IEEE 802.11be standard, but also includes some subfields of a Presence Bitmap subfield 612. The Multi-link Control field 603 will be described in detail below. The Common Info field 604 includes substantially the same information as the field of the same name specified in the IEEE 802.11be standard, but also includes an EMLSR Control subfield 632. The Common Info field 604 will be described in detail below. The Link Info field 605 includes substantially the same information as the field of the same name specified in the IEEE 802.11be standard.

The Multi-link Control field 603 includes subfields 610 to 612. The Type subfield 610 and the Reserved subfield 611 each include substantially the same information as the subfields of the same names specified in the IEEE 802.11be standard.

The Presence Bitmap subfield 612 includes subfields 620 and 621. The AP MLD Present subfield 620 includes substantially the same information as the subfield of the same name specified in the IEEE 802.11be standard. The EMLSR Control Present subfield 612 indicates whether the Common Info 604 field included in the Probe Request MultiLink element includes the EMLSR Control subfield 632. The EMLSR Control subfield 632 has a length of 1 bit. In a case where the value of the EMLSR Control subfield 632 is 1, it means that the Probe Request Multi-Link element includes the EMLSR Control subfield 632. In contrast, in a case where the value of the EMLSR Control subfield 632 is 0, it means that the Probe Request Multi-Link element does not include the EMLSR Control subfield 632.

The Common Info field 604 includes subfields 630 to 632. The Common Info Length subfield 630 and the AP MLD ID subfield 631 each include substantially the same information as the subfields of the same names specified in the IEEE 802.11be standard.

The EMLSR Control subfield 632 is present in a case where the value of the EMLSR Control Present subfield 621 is 1 and not present in a case where the EMLSR Control Present subfield 621 is 0. The EMLSR Control subfield 632 includes an EMLSR Mode subfield 640 and an EMLSR Link Bitmap subfield 641.

By including the same value as the value of the EMLSR Mode subfield 520 of the UHR Operation element received from the communication apparatus 101 in the EMLSR Mode subfield 640, the communication apparatus 102 can permit enabling-disabling of the EMLSR mode requested by the communication apparatus 101. In contrast, the communication apparatus 102 can reject the request from the communication apparatus 101 by including a value different from that of the communication apparatus 101 in the EMLSR Mode subfield 640. In addition to the EMLSR Mode subfield 640, by including, in the EMLSR Link Bitmap subfield 641, the value equivalent to the value in the EMLSR Link Bitmap subfield 521 of the UHR Operation element received from the communication apparatus 101, the communication apparatus 102 may be able to permit enabling-disabling of the EMLSR mode requested by the communication apparatus 101. In contrast, the communication apparatus 102 may be able to reject the request from the communication apparatus 101 by including a value different from that of the communication apparatus 101 in the EMLSR Link Bitmap subfield 641.

The communication apparatus 102 may include a Basic Multi-Link element in the Association Request frame or Reassociation Request frame and include information indicating whether the communication apparatus 101 is permitted to enable the EMLSR mode in the element.

Fig. 7 illustrates an example of the configuration of the Basic Multi-Link element in a case where information indicating whether enabling of the EMLSR mode is permitted is included. The Basic Multi-Link element includes fields 700 to 705. The Basic Multi-Link element includes substantially the same information as the element of the same name specified in IEEE 802.11be, but also includes some subfields of the Multi-link Control field 703 and the Common Info field 704. The Element ID field 700, the Length field 701, and the Element ID Extension field 702 each include substantially the same information as the fields of the same names specified by the IEEE 802.11be standard. The Multilink Control field 703 includes substantially the same information as the field of the same name specified in the IEEE 802.11be standard, but also includes some subfields of a Presence Bitmap subfield 712. The Multi-link Control field 703 will be described in detail below. The Common Info field 704 includes substantially the same information as the field of the same name specified in the IEEE 802.11be standard, but also includes an EMLSR Control subfield 739. The Common Info field 704 will be described in detail below. The Link Info field 705 includes substantially the same information as the field of the same name specified in the IEEE 802.11be standard.

The Multi-link Control field 703 includes subfields 710 to 712. The Type subfield 710 and the Reserved subfield 711 each include substantially the same information as the subfields of the same names specified in the IEEE 802.11be standard.

The Presence Bitmap subfield 712 includes subfields 720 to 726 and the EMLSR Control Present subfield 621. The Link ID Info Present subfield 720, the BSS Parameters Change Count Present subfield 721, the Medium Synchronization Delay Information Present subfield 722, the EML Capabilities Present subfield 723, the MLD Capabilities and Operations Present subfield 724, the AP MLD ID Present subfield 725, and the Extended MLD Capabilities And Operations Present subfield 726 each include substantially the same information as the subfields of the same names specified in the IEEE 802.11be standard. The EMLSR Control Present subfield 621 is the same as described above and thus description thereof is omitted.

The Common Info field 704 is formed by subfields 730 to 738 and the EMRSR Control subfield 632. The Common Info Length subfield 730, the MLD MAC Address subfield 731, the Link ID Info subfield 732, the BSS Parameters Change Count subfield 733, the Medium Synchronization Delay Information subfield 734, the EML Capabilities subfield 735, the MLD Capabilities and Operations subfield 736, the AP MLD ID subfield 737, and the Extended MLD Capabilities And Operations subfield 738 each include substantially the same information as the subfields of the same names specified in the IEEE 802.11be standard. The EMRSR Control subfield 632 is the same as described above and thus description thereof is omitted.

The description returns to that of Fig. 4. When the multi-link setup procedure ends (S401), the wireless LAN control unit 301 receives a response from the communication apparatus 102 to a frame transmitted during the MLO Discovery or multi-link setup procedure, the frame including information indicating that enabling of the EMLSR mode is being attempted. It is then determined whether the enabling of the EMLSR mode is permitted based on the frame including information indicating that the enabling of the EMLSR mode is permitted (or rejected) from the communication apparatus 102 (S402).

As a result of the determination in S402, in a case where it is determined that the enabling of the EMLSR mode is permitted, the wireless LAN control unit 301 establishes EMLSR links with the communication apparatus 102 and initiates an operation in the EMLSR mode (S403). Then, the operation for enabling or disabling the EMLSR mode according to the present invention ends.

In contrast, as a result of the determination in S402, in a case where it is determined that the enabling of the EMLSR mode is rejected, the wireless LAN control unit 301 establishes a multilink, which is not EMLSR links, with the communication apparatus 102 and initiates a normal multilink operation, which is not in the EMLSR mode (S403). Then, the operation for enabling or disabling the EMLSR mode according to the present invention ends.

While not exchanging data with the communication apparatus 102 in a state of operating in the EMLSR mode, the wireless LAN control unit 301 waits in a state where an initial frame transmitted from the communication apparatus 102 can be received on multiple links among the EMLSR links. That is, the wireless LAN control unit 301 waits simultaneously on each of the EMLSR links indicated by the EMLSR Link Bitmap subfield 521 within the EMLSR Control field 506 of the transmitted UHR Operation element to receive an initial frame transmitted by the communication apparatus 102. The initial frame may be a control frame or a data frame. In the case of a control frame, it may be a frame in which the communication apparatus 102 requests a transmission opportunity, such as an RTS frame. In the case of a data frame, it may be a frame that does not include substantial data, such as a null data physical layer protocol data unit (NDP). When the communication apparatus 101 receives an initial frame, the communication apparatus 101 exchanges data with the communication apparatus 102 on the link where the initial frame was received. When the data exchange is completed, the communication apparatus 101 repeats the operation of waiting to receive an initial frame transmitted by the communication apparatus 102 again.

Since the communication apparatus 101 is an AP MLD, there may be a case where data may be transmitted from another communication apparatus different from the communication apparatus 102 during the period when data is being transmitted or received on the link where the initial frame was received. However, in a case where the communication apparatus 101 is transmitting data while operating in the EMLSR mode, the communication apparatus 101 cannot receive data on a link different from the link on which the communication apparatus 101 is transmitting the data. Thus, in a case where the communication apparatus 101 transmits data in the EMLSR mode, data transmission from other communication apparatuses to the communication apparatus 101 may be prohibited by ensuring transmission opportunities on links where data is not transmitted. In this manner, by preventing data transmission from other communication apparatuses on links different from the link where data is transmitted, it is possible to prevent the communication apparatus 101 from failing to receive data.

Moreover, the communication apparatus 101 may be configured to include, in the Beacon that is transmitted periodically after the EMLSR links are established, information indicating that the communication apparatus 101 is operating in the EMLSR mode and information indicating the link on which the communication apparatus 101 is operating in the EMLSR mode. In this case, the communication apparatus 101 includes the UHR Operation element described in Fig. 5 above in the Beacon to be transmitted. In a case where the communication apparatus 101 is operating in the EMLSR mode, the wireless LAN control unit 301 indicates, in the EMLSR Mode subfield 520, that the communication apparatus 101 is operating in the EMLSR mode. Moreover, the communication apparatus 101 stores, in the EMLSR Link Bitmap subfield 521, information indicating the link on which the communication apparatus 101 is operating in the EMLSR mode. During the period when the communication apparatus 101 is exchanging data with the communication apparatus 102 in the EMLSR mode, the communication apparatus 101 cannot communicate on a link different from the link where the data is being exchanged. Thus, even when a response signal to the Beacon is transmitted from another communication apparatus during the above-mentioned period, the communication apparatus cannot receive the signal. In light of this, the Beacon may be transmitted on only one link in a case where the communication apparatus 101 is operating in the EMLSR mode.

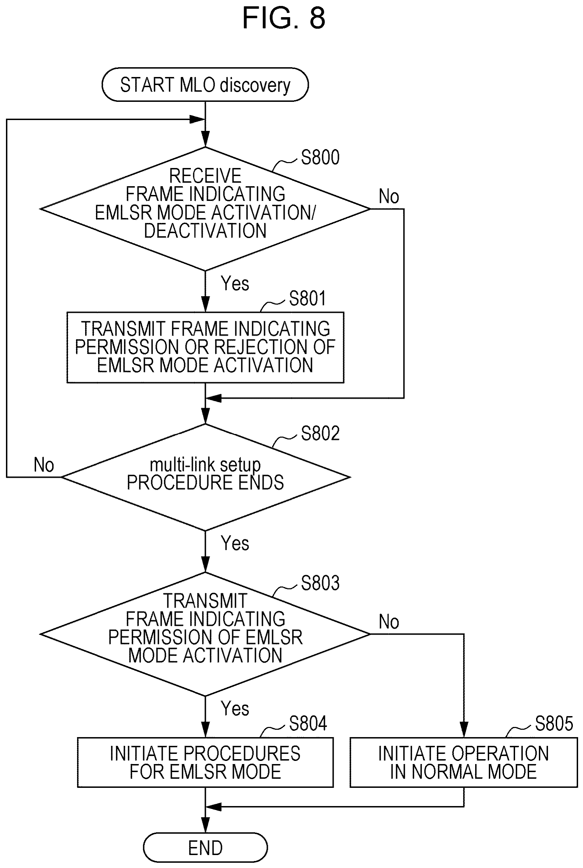

Subsequently, an operation of the communication apparatus 102, namely a non-AP MLD, related to an operation for enabling or disabling the EMLSR mode according to the present invention will be described using Fig. 8. This operation begins when the communication apparatus 102 initiates the MLO discovery procedure. In the present embodiment, it is assumed that individual processes indicated by the flowchart illustrated in Fig. 8 are realized by a processor of the control unit 202 of the communication apparatus 102 executing programs for realizing each control module. Note that data transmission-reception processing, etc. is realized in cooperation with hardware such as a communication unit. As described above, part or the entirety of the processing may be realized by ASICs, ASSPs, SoCs, etc. Note that in a case where the subject of processing is to be clarified, each function unit described using Fig. 3 executed by the control unit 202 will be described as the subject.

During the MLO discovery or multi-link setup procedure (S800 to S802), when receiving, from the communication apparatus 101, a frame including information indicating that enabling of the EMLSR mode is being attempted (S800), the communication apparatus 102 determines whether to permit the communication apparatus 101 to enable the EMLSR mode. In this case, the communication apparatus 102 may determine whether to permit the communication apparatus 101 to enable the EMLSR mode, based on information prestored in the memory unit 305 or information received by the UI control unit 304 from the user via the input unit 204. In accordance with the determination as to whether the communication apparatus 101 is permitted to enable the EMLSR mode, the wireless LAN control unit 301 of the communication apparatus 102 includes information indicating whether to permit the communication apparatus 101 to enable the EMLSR mode or reject the communication apparatus 101 from enabling the EMLSR mode in a frame to be transmitted during the MLO discovery or multilink setup procedure (S801). Note that the frames according to the present invention that the communication apparatus 102 transmits to the communication apparatus 101 during the MLO discovery or multi-link setup procedure are as described in the description of the operation of the communication apparatus 101.

When the multi-link setup procedure ends (S802), the wireless LAN control unit 301 of the communication apparatus 102 determines whether the frame including information indicating whether to permit the communication apparatus 101 to enable the EMLSR mode or reject the communication apparatus 101 from enabling the EMLSR mode is transmitted during the MLO discovery or multi-link setup procedure (S803).

In a case where the wireless LAN control unit 301 of the communication apparatus 102 determines in S803 that the enabling of the EMLSR mode is permitted, the communication apparatus 101 initiates procedures for operating in the EMLSR mode (S804). The operation for permitting the enabling of the EMLSR mode according to the present invention ends.

In contrast, in a case where it is determined in S803 that the enabling of the EMLSR mode is rejected, normal multilink operation, which is not the EMLSR mode, is initiated (S805). The operation for permitting the enabling or disabling of the EMLSR mode according to the present invention ends.

While handling the EMLSR mode operation of the communication apparatus 101, when data to be transmitted to the communication apparatus 101 occurs, the wireless LAN control unit 301 of the communication apparatus 102 transmits an initial frame to the communication apparatus 101 on one of the EMLSR links indicated in the EMLSR Link Bitmap subfield 521 within the EMLSR Control field 506 of the UHR Operation element received from the communication apparatus 101. Thereafter, data exchange with the communication apparatus 101 is performed.

Note that the communication apparatus 101 does not have to perform the operations in S402 and S404. In this case, regardless of whether or not the communication apparatus 101 has received the frame including information indicating the enabling of the EMLSR mode is permitted from the communication apparatus 102, the communication apparatus 101 initiates operation in the EMLSR mode after the multi-link setup procedure ends. Moreover, in this case, the communication apparatus 102 does not have to perform the operations in S801, S803, and S805. In this case, simply by receiving, from the communication apparatus 101, a frame including information indicating that the communication apparatus 101 is attempting to enable the EMLSR mode, the communication apparatus 102 handles the EMLSR mode operation of the communication apparatus 101 after the multi-link setup procedure ends.

### [Other Examples]

Each of the communication apparatuses described in the above-mentioned present embodiment may be a printer with a printing means. In a case where the communication apparatus is operating as a printer, for example, the communication apparatus can print image data acquired through data exchange with a partner apparatus.

Each of the communication apparatuses described in the present embodiment may be a camera with an image capturing means. In a case where the communication apparatus is operating as a camera, for example, the communication apparatus can exchange captured data through communication with a partner apparatus.

The communication apparatus 101 described in the present embodiment may be, for example, a smartphone with a tethering function. In this case, the user enables the tethering function of the smartphone using the smartphone's operation unit. The smartphone that has accepted the user operation to enable the tethering function will begin functioning as a mobile AP MLD. The smartphone functioning as a mobile AP MLD establishes a multilink (or EMLSR links) with a non-AP MLD such as the communication apparatus 102. The search process for an opposing apparatus and the multilink setup procedure after the smartphone activates the mobile AP MLD are the same as in the embodiment described above. Lastly, the smartphone provides Internet connectivity to the non-AP MLD that is connected to the mobile AP MLD. Specifically, the smartphone that receives data from the non-AP MLD connected to itself via wireless communication compliant with the IEEE 802.11 standard transmits the data to external devices on the Internet via mobile communication networks such as 5G and LTE. The smartphone also transmits data addressed to the non-AP MLD received via the mobile communication networks to the non-AP MLD via wireless communication compliant with the IEEE 802.11 standard. The above processes allow the communication apparatus 102 to connect to the Internet via mobile data communication with the communication apparatus 101, even if the communication apparatus 102 is a device that cannot perform mobile data communication. In that case, it becomes possible to trigger the start of operation in the EMLSR mode from the smartphone that functions as a mobile AP MLD. Thus, it is possible to actively attempt to use the EMLSR mode in smartphones that operate on batteries, for example. Thus, it will be possible to provide tethering functionality that utilizes less congested links while reducing power consumption in smartphones.

In addition, a recording medium on which software program code is recorded to implement the functions described above may be supplied to a system or device, and the computer (a CPU, an MPU) in the system or device may read and execute the program code stored on the recording medium. In this case, the program code itself, which is read from the storage medium, will implement the functions of the embodiment described above, and the storage medium storing the program code will constitute the device described above.

For example, flexible disks, hard disks, optical disks, magneto-optical disks, CD-ROMs, CD-Rs, magnetic tapes, non-volatile memory cards, ROMs, DVDs, etc. can be used as storage media for supplying the program code.

In addition to the above-mentioned functions being implemented by the computer executing the read-out program code, the OS running on the computer may also perform part or all of the actual processing on the basis of the instructions of that program code to implement the above-mentioned functions. OS stands for Operating System.

Furthermore, the program code read from the storage medium is written into a memory provided in a function expansion board inserted in the computer or in the function expansion unit connected to the computer. Then, based on the instructions of that program code, the CPU in the function expansion board or function expansion unit may perform part or all of the actual processing to implement the functions described above.

The present invention can also be realized through processing in which a program that implements one or more functions of the above-mentioned embodiment is supplied to a system or device via a network or storage medium, and one or more processors in a computer of the system or device read and execute the program. The present invention can also be realized by a circuit (for example, an ASIC) that implements one or more functions.

The present invention is not limited to the above-mentioned embodiments, and various changes and modifications are possible without departing from the spirit and scope of the present invention. Accordingly, the claims are attached to disclose the scope of the present invention to the public.

This application claims the benefit of Japanese Patent Application No. 2023-065262, filed April 12, 2023, which is hereby incorporated by reference herein in its entirety.

## Claims

1. A communication apparatus capable of operating as an access point, the communication apparatus comprising:
an establishing means that establishes a multilink with another communication apparatus in response to a connection request from the other communication apparatus; and
a transmission means that transmits information related to an operation in an Enhanced Multi-Link Single Radio (EMLSR) mode in a case where the multilink is established.

2. The communication apparatus according to claim 1, wherein
the information related to the operation in the EMLSR mode is information indicating that the communication apparatus is attempting to enable the EMLSR mode.

3. The communication apparatus according to claim 1 or 2, wherein
the transmission means further transmits information related to a link on which the communication apparatus operates in the EMLSR mode.

4. The communication apparatus according to any one of claims 1 to 3, wherein
the transmission means transmits the information related to the operation in the EMLSR mode in multi-link operation (MLO) discovery or multi-link setup.

5. The communication apparatus according to any one of claims 1 to 4, wherein
the transmission means transmits the information related to the operation in the EMLSR mode to the other communication apparatus using a Beacon frame, a Probe Response frame, or an Association Response frame.

6. The communication apparatus according to any one of claims 1 to 5, wherein
the establishing means establishes, as the multilink, EMLSR links on which the communication apparatus is capable of operating in the EMLSR mode.

7. The communication apparatus according to claim 6, further comprising:
a control means that performs control so as to operate in the EMLSR mode on the EMLSR links, wherein
in a case of operating in the EMLSR mode, the control means initiates data exchange with the other communication apparatus using one of the EMLSR links.

8. The communication apparatus according to claim 7, wherein
in the case of operating in the EMLSR mode, the control means performs control such that it is possible to receive a predetermined frame on a plurality of links among the EMLSR links, and
initiates data exchange with the other communication apparatus using one of the EMLSR links in response to reception of the predetermined frame.

9. The communication apparatus according to claim 7 or 8, wherein
in a case of exchanging data with the other communication apparatus while operating in the EMLSR mode, the control means performs control so as to prohibit transmission of a frame from another communication apparatus to the communication apparatus on a link different from the link where the data exchange is performed.

10. The communication apparatus according to any one of claims 7 to 9, wherein
in a case of exchanging data with the other communication apparatus while operating in the EMLSR mode, the control means ensures a transmission opportunity for the communication apparatus on a link different from the link where the data exchange is performed.

11. The communication apparatus according to any one of claims 6 to 10, wherein
the transmission means
includes, in a case where the establishing means has already established the EMLSR links, information indicating that the EMLSR links have already been established in a Beacon frame and transmits the Beacon frame.

12. The communication apparatus according to any one of claims 1 to 11, wherein
the communication apparatus is a communication apparatus capable of operating as an Access Point Multi-Link Device (AP MLD).

13. The communication apparatus according to any one of claims 1 to 12, wherein
the transmission means transmits, to the other communication apparatus, the information related to the operation in the EMLSR mode using a frame including a UHR Operation element in which the information related to the operation in the EMLSR mode is included.

14. The communication apparatus according to any one of claims 1 to 13, wherein
the connection request from the other communication apparatus is an Association Request frame, and
the establishing means establishes the multilink by transmitting an Association Response frame in response to the Association Request frame.

15. A communication apparatus comprising:
an establishing means that establishes a multilink with an access point;
a reception means that receives first information related to an operation in an Enhanced Multi-Link Single Radio (EMLSR) mode in a case where the multilink is established; and
a transmission means that transmits, to the access point, second information related to the first information, based on the first information received by the reception means.

16. The communication apparatus according to claim 15, wherein
the first information is information indicating that the access point is attempting to enable the EMLSR mode, and
the second information is information indicating that the access point is permitted to operate in the EMLSR mode.

17. A control method for a communication apparatus capable of operating as an access point, the control method comprising:
an establishing step for establishing a multilink with another communication apparatus in response to a connection request from the other communication apparatus; and
a transmission step for transmitting information related to an operation in an Enhanced Multi-Link Single Radio (EMLSR) mode in a case where the multilink is established.

18. A program for causing a computer to function as the control method for a communication apparatus according to claim 17.
